# EUROPEAN PATENT APPLICATION

(11) **EP 1 118 383 A1**
(43) Date of publication of application: **25.07.2001**
(21) Application number: 00400145.9
(22) Date of filing: 20.01.2000
(51) Int. Cl.: B01J 23/00, F23C 11/00, B01J 23/34, B01J 23/74

(54) **Perovskite oxidation catalysts and the process for their preparation**

(71) Applicant: GAZ DE FRANCE (SERVICE NATIONAL), 75017 Paris (FR); Societe en Commandite Gaz Metropolitain, Montreal, Quebec H2K 2X3 (CA)
(72) Inventor: Kirchnerova, Jitka, Montreal, Quebec H3W 2L2 (CA); Klvana, Danilo, Montreal, Quebec H3W 2L2 (CA)
(74) Representative: Lerner, François

(57) **Abstract**

Thermostable metal oxide catalysts of the general formula AB₁₋ₓMₓO_{3-δ} having a perovskite crystal structure and the process of making the same. A and B are cations forming refractory oxides. M is a relatively non-volatile active cation and acts as a doping of site B in an amount of about 0.01 to about 0.30. Cations A, B and M are so chosen as to assure a deficiency in oxygen represented by δ of at least 0.02. The catalysts according to the present invention show good catalytic properties even after aging at temperatures above 1300 °C.

## Description

Thermally stable, highly active perovskite catalysts for complete oxidation at high temperatures, and the process for their preparation

### FIELD OF THE INVENTION

The present invention relates to catalytic materials. More specifically, the present invention is concerned with highly active catalytic materials of perovskite-type structure having high resistance to thermal aging and to the process of their preparation.

### BACKGROUND OF THE INVENTION

Power generation through traditional combustion of fossil fuels, of which natural gas is environmentally the most acceptable, represents a source of large quantities of noxious nitrogen oxides (NOₓ). These emissions can substantially be reduced by using lean combustion mixtures and lowering thereby combustion temperatures. However, to sustain combustion of lean mixtures, highly active catalytic materials are needed. Catalytic combustion allows to combust (complete oxidation) fuel/air mixture of very wide range of fuel concentrations, and can even be used in explosive atmospheres. But, the lower the fuel concentration, the more active catalyst is required. Evidently, these catalysts must be able to conserve their catalytic properties in a high temperature environment.

The most active catalysts are those based on noble metals such as palladium and platinum. However, these catalysts are expensive and moreover lose their catalytic properties at temperatures above 1000 °C.

Multi-metal oxides having a beta-alumina structure and comprising mainly aluminum oxide, alkaline earth oxide and/or lanthanum oxide, as well as an active element, typically manganese, show good catalytic activity, even under high temperatures. However, a major drawback of using such materials as catalysts is that they suffer from low resistance to thermal shock when in form of self supporting structures. This is mainly because these materials have a two-dimensional coefficient of thermal expansion. They also require complex methods for their preparation.

Transition metal based oxides having perovskite crystal structure represented by the formula La₁₋ₓAₓMO₃, wherein A is an alkaline earth metal such as Ca, Sr and Ba, and M is a transition metal such as Co, Mn, Fe and Ni, show high catalytic activity. A drawback of such materials, when the active transition metal is Cobalt, Manganese or Iron, is their relatively low melting point. In high temperature environment, they are prone to sintering and they lose their catalytic activities. They are stable only to about 800 °C. The use of chrome as the active transition metal may lead to better results but chromates still are not suitable for temperatures above 1100 °C because of the high volatility of chromium in the environment of combustion products. Similarly, platinum group metals, when replacing the transition metals in a perovskite structure, may become volatile and are furthermore expensive.

Stability of the perovskite phase under high temperatures can be obtained by preparing such phase with refractory oxides such as ZrO₃, TiO₂, La₂O₃, Y ₂O₃, etc. The resulting materials, described by the general formula ABO₃, (ex.: SrZrO₃, SrTiO₃, LaAlO₃) have high melting point and their thermal stability is excellent. Indeed, for their refractory properties, these perovskites which themselves exhibit rather low activity, have been suggested and tested as support materials for transition metal oxides. However, with such materials, a possible reaction can occur between the two components to form a non-active phase. A non-active phase can also occur if there is sintering on the surface of the material. These non-active phases usually have a relatively low melting point.

U.S. Pat. No. 4,126,580 presents a perovskite catalyst having improved stability in a wide variety of chemical environments. The elements entering in the composition of these materials are chosen to obtain a material having a high lattice stability index. This is done by incorporating metals having low first ionization potentials. A drawback of number of these materials, however, is that their catalytic properties seem to decrease rapidly above 1000 °C.

U.S. Pat. No. 4,110,251 describes other catalytic compositions having perovskite-type crystal structure and the general formula ABO_{3-f}X_{f}, where X is fluoride or chloride, and f is about from 0.1 to 1.0. The oxygen deficiency, caused here by the presence of fluoride or chloride, enhances the resistance to reducing environment and increases the thermal stability of the composition. However, like the composition described in U.S. Pat. No. 4,126,580, the composition described in U.S. Pat. No. 4,110,251 does not seem to be adequate for temperatures above 1000 °C.

U.S. Pat. No. 5,712,220 presents a composition of matter suitable for use in fabricating components used in solid-state oxygen separation devices and represented by the formula LnₓA'_{x'}A"_{x"}B_{y}B'_{y'}'B"_{y"}O_{3-z}, wherein A' is a Group I element, A" is selected from groups I, II and III, and all B, B' and B" are transition metals. The number Z is a number which renders the compound charge neutral. There is no definition of a component which is a refractory oxide at the B site. Moreover, the materials described in U.S. Pat. No. 5,712,220 are not suitable for catalytic combustion of hydrocarbons at high temperatures.

### OBJECTS OF THE INVENTION

An object of the present invention is therefore to provide thermally stable, highly performing catalytic materials suitable for high temperature applications in relatively corrosive environments.

Another object of the invention is further to provide catalytic materials that can withstand temperatures above 1200 °C and that can still present relatively good catalytic activity.

Another object of the invention is to provide catalytic materials of the general formula ABO₃ having a depletion in oxygen of at least about 0.02.

Still another object of the invention is to provide a simple process to prepare catalytic materials of perovskite-type structure that can be shaped into self-supporting forms or that can be used over other refractory support materials.

### SUMMARY OF THE INVENTION

More specifically, in accordance with the present invention, there is provided a thermostable metal oxide catalyst having the general formula ABO₃ and a perovskite crystal structure, wherein
A represents a cation site which is occupied by at least one metal having an ionic radius between 0.09 nm and 0.15 nm;
B represents a cation site which is occupied by at least one metal having an ionic radius between 0.05 nm and 0.10 nm; and
metal cations A and B are present in about the same stoichiometric proportions,
the improvement wherein:
said catalyst has the formula ABO_{3-δ}, wherein δ is a deficiency in oxygen of at least about 0.02.

In a preferred embodiment, the catalyst comprises a catalytic metal M, providing a catalyst of formula AB₁₋ₓMₓO_{3-δ}.

In still a more preferred embodiment, the catalytic metal is a transition metal of atomic number from 25 to 28 and x is equal to or lower than about 0.3.

In the most preferred embodiment, A is selected from Ln, Ca, Sr and mixtures thereof, and B is selected from Zr, Ce, Ti, Y, Al and mixtures thereof.

Such selection of elements provides for refractory and highly active catalysts.

According to another aspect of the present invention, there is provided a process of preparation of a thermostable metal oxide catalyst having the general formula AB₁₋ₓMₓO_{3-δ} and a perovskite crystal structure, wherein
A represents a cation site which is occupied by at least one metal having an ionic radius between 0.09 nm and 0.15 nm;
B represents a cation site which is occupied by at least one metal having an ionic radius between 0.05 nm and 0.10 nm; and
metal cations A and B are present in about the same stoichiometric proportions;
δ represents a deficiency in oxygen of at least about 0.02;
M represents a cation site which is occupied by at least one catalytic metal;
comprising the steps of:
a) admixing a precursor of each metal cation A, B and M in the form of an oxide, a hydroxide, a carbonate, a salt, or any mixture thereof, with a water-comprising solution, and allowing them to react to form an aqueous suspension of particles of hydroxides, each of A, B and M being mixed in stoichiometric proportions, and overall provide for δ larger than about 0.02;
b) drying said aqueous suspension, whereby dried particles are obtained; and
c) calcining said dried particles.

Other objects, advantages and features of the present invention will become more apparent upon reading of the following non restrictive description of preferred embodiments thereof, given by way of example only with reference to the accompanying tables.

### DETAILED DESCRIPTION OF THE PREFERRED EMBODIMENTS OF THE INVENTION

The present invention relates to materials having a perovskite crystal structure and represented by the general formula ABO₃. These materials are further characterized in that sites A and B both contain metal cations. The general formula teaches that sites A and B are occupied by the same number of cations. The ideal perovskite structure is cubical with the larger cations occupying the corners of the cube and the smaller cations occupying the centre of the cube. The oxygen atoms are located at the centre of each face of the cube. Thus, cations from A-sites are coordinated with twelve oxygen atoms and cations from B-sites are coordinated with six oxygen atoms. Other perovskite structures, based on variation of the above structure, are also known.

The cations from A-sites are generally occupied by a metal atom having an ionic radius between 0.09 nm and 0.15 nm, while cations from B-sites are generally occupied by a metal atom having an ionic radius between 0.05 nm and 0.10 nm.

More specifically, the materials of the present invention are based on refractory highly stable perovskites that are prepared from refractory oxides such as ZrO₂, TiO₂, La₂O₃, Y₂O₃, CeO₂, Al₂O₃, MgO, CaO and SrO. Although these perovskites exhibit very high melting points and are very stable, they are not good catalysts for complete oxidation of hydrocarbons.

These highly refractory perovskites are rendered catalytically active by doping the B-site with one or more transition metal cations M. In addition, the choice of cations in sites A and B is made in a way to assure that there is a deficiency in oxygen of at least about 2 percent. These two characteristics of the present invention assure that the refractory materials are not only highly stable, but also catalytically active, even after exposure to high temperatures.

The general formula of these refractory highly active catalysts of perovskite structure is AB₁₋ₓMₓO_{3-δ}, with δ≥0.02 (It is to be noted that, for reason of clarity, the δ will be written out of the following equations describing materials according to the present invention, but should always be implied). The doping of B-sites with transition metals has to be well controlled for the thermal stability to be preserved. The estimated maximum level of doping in sites B, to maximize the catalytic properties while preserving the thermal stability, is about 30 percent in stoichiometric proportion. A minimum doping of about 1 percent is required, so, in the above formula, 0.01 <≅x<≅0.30.

Experiments have shown that certain elements should preferably be used in order to obtain sufficient oxygen deficiency and both thermal stability and good catalytic activity at high temperatures. Cations A are preferably selected from the group consisting of Lanthanum, Calcium, Strontium and mixtures thereof. To assure optimal thermal stability of the catalysts of the present invention, cations B are preferably selected from the group consisting of Zirconium, Cerium, Titanium, Yttrium, Aluminum and mixture thereof. As mentioned hereinabove, these cations are selected from a group that can form refractory and non volatile oxides.

Doping catalytic metal cations are preferably selected from the group consisting of elements having an atomic number from 25 to 28: manganese, iron, cobalt and nickel. These transition metals are reasonably non-volatile.

The catalytic material of the present invention can be prepared, first, by mixing the precursors of the components of a given perovskite composition. Cations A are preferably provided as nonvolatile oxides or carbonates. Cations B come preferably from refractory oxides of very low volatility. The catalytic transition metal to dope site B is preferably provided in form of an aqueous solution of metal nitrates, although oxides, carbonates or other salts may also be used.

All the components are mixed in strictly stoichiometric proportions. The initial precursor suspension is mixed until a homogeneous suspension is obtained. The size of the suspension particles should preferably be smaller than 1 µm. The suspension may be homogenized by milling or by high speed mixing.

The resulting suspension is dried by freeze-drying or spray-drying or by any other convenient method known in the art. The perovskite phase is obtained by calcination at temperatures below 1000 °C.

### EXAMPLE 1

### PREPARATION OF Ca(Zr_{0.92}Y_{0.08})_{0.9}Ni_{0.1}O₃

A suspension is obtained by placing 20.00 g of calcium carbonate and 22.50 g of yttria stabilized (8wt%) zirconia fine powder (Zircar Inc.) into a 250 ml polyethylene bottle and by mixing thoroughly. To this mixture is incorporated 65 ml of a solution containing 5.812 g of nickel dinitrate hexahydrate. 100 ml of zirconia balls are then added to the resulting suspension. The suspension is milled for two hours, before being quickly frozen by pouring the suspension, with the grinding balls, into liquid nitrogen. The frozen material is then dried under vacuum on a commercial freeze-drier. The balls are separated from the dry precursor powder by sieving. The resulting powder is calcined in two steps without intermediate grinding. Finally the obtained perovskite powder is aged 7 hours at 1300 °C.

### EXAMPLE 2

### PREPARATION OF Sr(Zr_{0.92}Y_{0.08})_{0.9}Mn_{0.1}O₃

29.53 g of strontium carbonate are mixed with 22.50 g of yttria stabilized zirconia powder (Zircar Inc.). 65 ml of solution containing 5.74 g of manganese dinitrate hexahydrate is incorporated to the mixture. The resulting suspension is treated as the one described in example 1.

### EXAMPLE 3

### PREPARATION OF SrTi_{0.9}Fe_{0.1}O₃

36.908 g of strontium carbonate, 17.978 g of anatase (titanium dioxide) and 1.996 g gamma iron oxide (yFe₂O₃) are incorporated into 75 ml of distilled water. The resulting suspension is treated as in preceding examples.

### EXAMPLE 4

### PREPARATION OF SrTi_{0.8}Fe_{0.2}O₃

22.171 g of iron nitrate nanohydrate is dissolved in 80 ml of distilled water, and the solution is placed into a 250 ml polyethylene bottle. To this solution, 17.534 g of anatase and 40.51 g of strontium carbonate are added by small portions. The addition of SrCO₃ is accompanied by the evolution of carbon dioxide. When this ceased, the resulting suspension is treated as in preceding examples.

### EXAMPLE 5

### PREPARATION OF SrTi_{0.8}Fe_{0.1}Mn_{0.1}O₃

Similarly as in example 4, for the preparation of SrTi_{0.8}Fe_{0.2}O₃, a mixture of 36.908 g of strontium carbonate, 15.980 g of anatase and 1.998 g of gamma iron oxide are added in small portions to a solution containing 7.176 g of manganese nitrate hexahydrate, before doing all the mechanical and thermal manipulations described in preceding examples.

### EXAMPLE 6

### PREPARATION OF SrTi_{0.9}Co_{0.1}O₃

Similarly as in example 5, 29.526 g of strontium carbonate well mixed with 14.380 g of anatase are added by small portions to 75 ml of an aqueous solution containing 5.821 g of dissolved cobalt nitrate hexahydrate. The resulting suspension is again treated as in previous examples.

### EXAMPLE 7

### Preparation of LaAl_{0.9}Co_{0.1}O₃

16.455 g of lanthanum oxide placed in a 250 mL polyethylene bottle was wetted by 25 mL of distilled water. After about two hours required to complete the exothermic reaction to form lanthanum hydroxide, 70 mL of solution containing 34.11 g of aluminum trinitrate nanohydrate, and 2.911 g of cobalt dinitrate hexahydrate was added while mixing vigorously. The mixture which gels quickly was then milled using zirconia balls for at least fifteen minutes, before being processed by freeze-drying and calcination several hours at 700°C.

### EXAMPLE 8

### Preparation of La_{0.85}Sr_{0.15}Al_{0.68}Fe_{0.12}O₃

6.343 g of strontium nitrate was dissolved in 25 mL of distilled water. This solution was used to wet 27.97 g of lanthanum oxide and left for about two hours to react to form lanthanum hydroxide. 66.02 g of aluminum trinitrate nanohydrate was dissolved in 100 mL of distilled water and the solution was placed in a 500 mL polyethylene bottle. Into this solution 1.9164 g of gamma iron oxide was dispersed. Next, the thick suspension of lanthanum hydroxide was quickly incorporated while stirring vigorously. This mixture which gelled in few minutes was then milled by using added zirconia balls (150 mL) for three hours.

### EXAMPLE 9

### Preparation of La_{0.85}Sr_{0.15}Al_{0.87}Fe_{0.09}Co_{0.04}O₃

This material was prepared by a method similar to that described in Example 8. However, in this case the aluminum nitrate is replaced by boehmite. 6.343 g. of strontium nitrate was dissolved in 25 mL of distilled water. This solution was poured over 27.97 g of lanthanum oxide to wet it completely. In about two hours, the lanthanum oxide was transformed to lanthanum hydroxide by an exothermic reaction. This suspension was incorporated into a suspension of 11.51 g of boehmite in 65 mL of solution containing 7.27 g of iron nitrate nanohydrate, and 2.328 g of cobalt nitrate hexahydrate held in a 250 mL polyethylene bottle. To this mixture 100 mL of grinding zirconia balls was added and the suspension was milled for 3 h. The final suspension was treated as in the preceding examples to obtain the perovskite catalyst.

### COMPARATIVE EXAMPLE 10

### Preparation of Sr_{0.8}La_{0.2}MnAl₁₁O_{19-δ}

To the 30.5 g of boehmite well mixed with 1.645 g of lanthanum oxide in a polyethylene 250 mL bottle was added 70 mL of solution containing 8.4567 g of strontium nitrate and 14.35 g of manganese nitrate, and 100 mL of grinding zirconia balls. The mixture was milled 3 hours, and then treated as in the other examples. The beta-alumina structure was formed on calcination 12 h at 1100°C.

### COMPARATIVE EXAMPLES 11 TO 13

For the purpose of comparison, three perovskite compositions based only on transition metals were prepared by the method described in the international application W097/48641: LaMnO₃, La_{0.8}Sr_{0.2}MnO₃ and La_{0.66}Sr_{0.34}Ni_{0.3}Co_{0.7}O₃ with the following ingredients:
26.4 g lanthanum oxide (La₂O₃), 8.465 g strontium nitrate and 56.41 g manganese dinitrate hexahydrate for preparing La_{0.8}Sr_{0.2}MnO₃;
33 g lanthanum oxide (La₂O₃), and 56.41 g manganese dinitrate hexahydrate for preparing LaMnO₃; and
10.752 g lanthanum oxide (La₂O₃), 20.373 g cobalt nitrate hexahydrate, 8.724 g nickel nitrate hexahydrate and 7.195 g strontium nitrate for preparing La_{0.66}Sr_{0.34}Ni_{0.3}Co_{0.7}O₃.

After a 12 h calcination at 590°C followed by 4 h at 640°C, the specific surface areas were 10m²/g and their catalytic activity was very high. For comparison with the materials of the present invention the perovskites of this example were aged 26 h at 1070°C in air. This aging caused the specific surface areas to drop to about 0.6 m²/g.

### EXAMPLE 14

### USE OF THE MATERIALS OF THE PRESENT INVENTION FOR THE CATALYTIC COMBUSTION OF METHANE

Catalytic activity of materials of examples 1 to 9 was tested in a laboratory tubular reactor consisting of alumina ceramic tube having 1.3 cm of internal diameter. The activities are compared to activities of perovskites based only on transition metals (without refractory oxides on the B-site), LaMnO₃, La_{0.8}Sr_{0.2}MnO₃ and La_{0.66}Sr_{0.34}Ni_{0.3}Co_{0.7}O₃ and to those of a beta-alumina: Sr_{0.8}La_{0.2}MnAl₁₁O_{19-δ}.

The catalytic bed of 1 g catalyst powder diluted (mixed) with 10 ml pumice (particles of size from 350 to 500 µm) filed an annular space between the reactor tube and a thermocouple alumina sheath (0.64 cm diameter) passing in the center. Reaction mixture of 2% methane in air was flowing over the catalyst at 400 ml/min. The reactor was heated in steps of about 50 degrees. When a steady temperature was obtained, the effluents were analysed after removing water by a desiccant, by gas-chromatography using Porapak Q column in the case of methane and carbon dioxide.

Table I shows temperatures at which a given conversion (10%, 50% and 90%) of 2% methane in air is obtained over catalysts according to the present invention and other perovskites based only on transition metals without refractory oxides on the B-sites. All the materials were aged 26 h at 1070 °C.

**TABLE I**

| composition | SSA (m₂/g) | T₁₀ (°C) | T₅₀ (°C) | T₉₀ (°C) |
|---|---|---|---|---|
| SrTi_{0.8}Fe_{0.2}O₃ | 2.16 | 570 | 690 | 790 |
| SrTi_{0.9}Co_{0.1}O₃ | 1.29 | 580 | 680 | 780 |
| LaAl_{0.9}Co_{0.1}O₃ | 3.19 | 525 | 640 | 770 |
| La_{0.85}Sr_{0.15}Al_{0.88}Fe_{0.12}O₃ | 3.59 | 530 | 650 | 725 |
| La_{0.85}Sr_{0.15}Al_{0.87}Fe_{0.09}Co_{0.4}O₃ | 4.32 | 525 | 625 | 705 |
| LaMnO₃ | 1.03 | 540 | 675 | 825 |
| La_{0.8}Sr_{0.2}MnO₃ | 0.68 | 540 | 705 | 820 |
| La_{0.66}Sr_{0.34}Ni_{0.3}Co_{0.7}O₃ | 0.74 | 610 | 725 | 825 |

Table I shows that five materials according to the present invention have a specific surface area (SSA), and then catalytic activities, greater then catalysts based on transition metals only. One can see that it takes lower temperatures for the materials according to the present invention to convert 90% of methane than the materials without refractory oxides. Even for the conversion of 10% methane, the materials of this invention showed very good catalytic activities.

Table II presents temperatures at which a given conversion (10%, 50% and 90%) of 2% methane in air is obtained over catalysts according to the present invention. The results are compared to those obtained with a catalyst material having a beta-alumina structure. All the materials were aged in air 4 h at 1070 °C and 7 h at 1300 °C.

**TABLE II**

| composition | SSA (m₂/g) | T₁₀ (°C) | T₅₀ (°C) | T₉₀ (°C) |
|---|---|---|---|---|
| Ca(Zr_{0.912} Y_{0.088})_{0.9} Ni_{0.1}O₃ | 1.31 | 655 | 775 | 870 |
| Sr(Zr_{0.912}Y_{0.088})_{0.9}Mn_{0.1}O₃ | 2.75 | 670 | 750 | 810 |
| SrZr_{0.9}Ni_{0.1}O₃ | 4.59 | 575 | 747 | 870 |
| SrTi_{0.9}Fe_{0.1}O₃ | 2.04 | 575 | 700 | 800 |
| SrTi_{0.8}Fe_{0.2}O₃ | 1.31 | 575 | 705 | 840 |
| SrTi_{0.8}Fe_{0.1}Mn_{0.01}O₃ | 1.37 | 610 | 745 | 825 |
| SrTi_{0.85}Fe_{0.12}Mn_{0.03}O₃ | 2.00 | 575 | 675 | 805 |
| La_{0.85}Sr_{0.15}Al_{0.88}Fe_{0.12}O₃ | 1.41 | 600 | 725 | 820 |
| La_{0.85}Sr_{0.15}Al_{0.87}Fe_{0.09}Co_{0.04}O₃ | 1.89 | 560 | 675 | 770 |
| Sr_{0.8}La_{0.2}MnAl₁₁O_{19-δ} | 3.97 | 597 | 708 | 804 |

The results in table II show that the catalytic activities of materials according to the present invention are similar to those of the best beta-alumina known in the art, or even better. The main advantage of the materials according to the present invention, compared to beta-alumina, is their isosteric coefficient of thermal expansion which should provide a higher resistance to thermal shock. Another advantage is their simple process of preparation.

Table III shows again temperatures at which a given conversion of 2% methane in air is obtained over some of the catalysts of the last example. The results are still compared to those obtained with the same catalyst material having a beta-alumina structure. The materials were aged in air 7 h at 1300 °C and 6 h at 1450 °C.

**TABLE III**

| composition | SSA (m₂/g) | T₁₀ (°C) | T₅₀ (°C) |
|---|---|---|---|
| Sr(Zr_{0.912} Y_{0.088})_{0.9} Mn_{0.1}O₃ | 1.89 | 664 | 755 |
| SrTi_{0.9}Fe_{0.1}O₃ | 0.70 | 700 | 800 |
| SrTi_{0.8}Fe_{0.2}O₃ | 0.59 | 650 | 805 |
| SrTi_{0.8}Fe_{0.1}Mn_{0.1}O₃ | 0.76 | 650 | 755 |
| La_{0.85}Sr_{0.15}Al_{0.88}Fe_{0.12}O₃ | 0.58 | 645 | 805 |
| La_{0.85}Sr_{0.15}Al_{0.87}Fe_{0.09}Co_{0.04}O₃ | 0.85 | 645 | 780 |
| Sr_{0.8}La_{0.2}MnAl₁₁O_{19-δ} | 0.74 | 700 | 775 |

Table III shows that some materials according to the present invention have better catalytic activities than the best beta-alumina after being,aged at temperatures above 1300 °C.

Although the present invention has been described hereinabove by way of preferred embodiments thereof, it can be modified, without departing from the spirit and nature of the subject invention as defined in the appended claims.

## Claims

1. A thermostable metal oxide catalyst having the general formula ABO₃ and a perovskite crystal structure, wherein
- A represents a cation site which is occupied by at least one metal having an ionic radius between 0,09 nm and 0,15 nm;
- B represents a cation site which is occupied by at least one metal having an ionic radius between 0,05nm and 0,10 nm;
- metal cations A and B are present in about the same stoichiometric proportions; and
- said metal cation B is doped with at least one catalytic metal represented by M, in a stoichiometric proportion x of about 0,01 to about 0,3 to provide a catalyst having the formula AB₁₋ₓMₓO_{3-δ} with δ being a deficiency in oxygen of at least about 0,02, said at least one catalytic metal M is selected from the group of transition metals having atomic number from 25 to 28

2. A thermostable metal oxide catalyst according to claim 1, wherein the metal cation A is selected from the group consisting of Lanthanum, Calcium, Strontium and mixtures thereof.

3. A thermostable metal oxide catalyst according to any of the preceding claims, wherein the metal cation B is selected from the group consisting of Zirconium, Cerium, Titanium, Yttrium, Aluminum and mixtures thereof.

4. A thermostable metal oxide catalyst according to any of the preceding claims, wherein said catalyst has a formula SrZr₁₋ₓMₓO_{3-δ} wherein x ≤ 0,3.

5. A thermostable metal oxide catalyst according to any of claims 1 to 3, wherein said catalyst has a formula CaZr₁₋ₓMₓO_{3-δ} wherein x ≤ 0,3.

6. A thermostable metal oxide catalyst according to any of claims 1 to 3, wherein said catalyst has a formula SrTi₁₋ₓMₓO_{3-δ} wherein x ≤ 0,3.

7. A thermostable metal oxide catalyst according to any of the preceding claims, wherein M is Iron (Fe).

8. A thermostable metal oxide catalyst according to any of claims 1 to 6, wherein M is a mixture of Iron (Fe) and Manganese (Mn) or Cobalt (Co).

9. A thermostable metal oxide catalyst according to any of claims 1 to 3, wherein said catalyst has a formula La₁₋ₓSr_{y}MₓO_{3-δ} wherein x ≤ 0,3.

10. A thermostable metal oxide catalyst according to claim 9, wherein M is Iron (Fe).

11. A thermostable metal oxide catalyst according to claim 9, wherein M is a mixture of Iron (Fe) and Manganese (Mn) or Cobalt (Co).

12. A thermostable metal oxide catalyst according to any of the preceding claims, wherein:
- A represents a cation site which is occupied by at least one metal that can form a refractory non volatile oxide; and
- B represents a cation site which is occupied by at least one metal that can form a refractory non volatile oxide.

13. A process of preparation of a thermostable metal oxide catalyst having the general formula AB₁₋ₓMₓO_{3-δ} and a perovskite crystal structure, wherein
- A represents a cation site which is occupied by at least one metal having an ionic radius between 0,09 nm and 0,15 nm;
- B represents a cation site which is occupied by at least one metal having an ionic radius between 0,05nm and 0n10 nm;
- metal cations A and B are present in about the same stoichiometric proportions;
- δ represents a deficiency in oxygen of at least about 0,02; and
- M represents a cation site which is occupied by at least one catalytic metal in a stoichiometric proportion x of about 0,01 to about 0,3, said catalyst metal M is selected from the group of transition metals having an atomic number from 25 to 25;
said process comprising the steps of:
a) using a precursor of each metal cation A and B and M, to form an aqueous suspension of particles, said precursor being mixed in stoichiometric proportions, and overall providing for a depletion of oxygen of δ;
b) drying aid aqueous suspension, whereby dried particles are obtained; and
c) calcining said dried particles.

14. A process of preparation of a thermostable metal oxide catalyst according to claim 13, wherein calcining step c) is done at temperatures below 1000°C.

15. A process of preparation of a thermostable metal oxide catalyst according to any of claims 13 to 14, wherein aid precursor metal cation M is a salt.

16. A process of preparation of a thermostable metal oxide catalyst according claim 15, wherein said salt is a nitrate.

17. A process of preparation of a thermostable metal oxide catalyst according to any of claims 13 to 16, wherein the metal cation A is selected from the group consisting of Lanthanum, Calcium, Strontium and mixtures thereof, and the precursor form thereof is an insoluble oxide or carbonate.

18. A process of preparation of a thermostable metal oxide catalyst according to any of claims 13 to 17, wherein the metal cation B is selected from the group consisting of Zirconium, Cerium, Titanium, Yttrium, Aluminum and mixtures thereof, and the precursor form thereof is an insoluble oxide or a soluble salt.
